# EUROPÄISCHE PATENTANMELDUNG

(11) **EP 1 067 143 A1**
(43) Veröffentlichungstag der Anmeldung: **10.01.2001**
(21) Anmeldenummer: 00111862.9
(22) Anmeldetag: 08.06.2000
(51) Int. Cl.: C08B 37/16

(54) **Verfahren zur Herstellung von alkylierten Cyclodextrin-Derivaten**

(30) Priorität: 02.07.1999 DE 19930553
(71) Anmelder: Wacker-Chemie GmbH, 81737 München (DE)
(72) Erfinder: Heitmann, Torsten, Dr., 84489 Burghausen (DE); Neumann, Stefan, Dr., 52501 Ottumwa, Iowa (US); Maier, Ludwig, 84307 Eggenfelden (DE)
(74) Vertreter: Potten, Holger

(57) **Zusammenfassung**

Verfahren zur Herstellung von alkylierten CyclodextrinDerivaten bei dem α-, β- und/oder γ-Cyclodextrin in einer geeigneten Base mit einem geeigneten O-Alkylierungsmittel umgesetzt werden, wobei zunächst α-, β- und/oder γ-Cyclodextrin in einer wässrigen Lösung der Base zu einer Konzentration von 25 - 75 % w/w derart gelöst werden, daß pro mol CD 1 - 5 mol der Base eingesetzt werden und anschließend gleichzeitig oder in beliebiger Reihenfolge portionsweise oder kontinuierlich 10 bis 250 mol des O-Alkylierungsmittels pro mol CD sowie bis zu einer maximalen Basekonzentration von 10 bis 30 mol pro mol CD die geeignete Base zugegeben wird, dadurch gekennzeichnet, daß das Verfahren bei einem Druck größer 10 bar abs. und mit einer Reaktionszeit kleiner 5 Stunden durchgeführt wird.

## Beschreibung

Die Erfindung betrifft ein Verfahren zur Herstellung von alkylierten Cyclodextrin-Derivaten.

Cyclodextrine sind cyclische Oligosaccharide, die aus 6, 7 oder 8 α(1-4)-verknüpften Anhydroglucoseeinheiten aufgebaut sind. Die durch enzymatische Stärkekonversion hergestellten α-, β- oder γ-Cyclodextrine unterscheiden sich in dem Durchmesser ihrer Kavität und eignen sich generell zum Einschluß von zahlreichen hydrophoben Gastmolekülen unterschiedlicher Größe. Die Anwendungen sind durch die geringen Löslichkeiten, speziell des β-Cyclodextrins (1,8% w/v in Wasser bei 25°C), limitiert.

Eine gängige Methode, die Löslichkeit zu erhöhen, ist die chemische Derivatisierung an den freien Hydroxylgruppen der Cyclodextrine. An den einzelnen Anhydroglucoseeinheiten können an der 2-, 3- und/oder 6-Position geeignete Substituenten eingeführt werden. Speziell die Methylierung von Cyclodextrinen liefert Produkte, die sowohl in Wasser als auch in organischen Lösungsmitteln eine gute Löslichkeit haben.

Es sind bereits eine Reihe von verschiedenen Verfahren zur Herstellung von alkylierten Cyclodextrin-Derivaten bekannt. EP 646 602 A1 (entspricht US 5,710,268) beschreibt ausführlich den diesbezüglichen Stand der Technik und offenbart selbst ein kostengünstiges Verfahren zur Herstellung von alkylierten Cyclodextrin-Derivaten, welches nachteiligerweise allerdings im absatzweisen Betrieb, dem sogenannten batch-Verfahren, durchgeführt wird.

Aufgabe der Erfindung war es, ein wirtschaftliches Verfahren zur Herstellung von alkylierten Cyclodextrin-Derivaten bereitzustellen, welches sich bevorzugt zur kontinuierlichen Herstellung von alkylierten Cyclodextrin-Derivaten eignet.

Die Aufgabe wird gelöst durch ein Verfahren, bei dem α-, β- und/oder γ-Cyclodextrin in einer geeigneten Base mit einem geeigneten O-Alkylierungsmittel umgesetzt werden, wobei zunächst α-, β- und/oder γ-Cyclodextrin in einer wässrigen Lösung der Base zu einer Konzentration von 25 - 75 % w/w derart gelöst werden, daß pro mol CD 1 - 5 mol der Base eingesetzt werden und anschließend gleichzeitig oder in beliebiger Reihenfolge portionsweise oder kontinuierlich 10 bis 250 mol des O-Alkylierungsmittels pro mol CD sowie bis zu einer maximalen Basekonzentration von 10 bis 30 mol pro mol CD die geeignete Base zugegeben wird, dadurch gekennzeichnet, daß das Verfahren bei einem Druck größer 10 bar abs. und mit einer Reaktionszeit kleiner 5 Stunden durchgeführt wird.

Des weiteren kann zusätzlich Dimethylether zugegeben werden.

Die übrigen Verfahrenskomponenten- und parameter entsprechen vorzugsweise den Angaben im EP-A 646 602.

So sind im erfindungsgemäßen Verfahren α-, β- und/oder γ-Cyclodextrin wie sie käuflich erhältlich sind, einsetzbar. Die Cyclodextrine können jedoch ebenso in an sich bekannter Weise, beispielsweise durch enzymatische Umsetzung von Stärke mit Cyclodextrin Glycosyltransferase (CGTase E.C.2.4.1.19), hergestellt werden.

Geeignete Basen sind beispielsweise Alkalihydroxide, Erdalkalihydroxide oder deren Mischungen. Vorzugsweise geeignet sind Alkalihydroxide.

Als Alkalihydroxid wird vorzugsweise Kalium- und/oder Natriumhydroxid, besonders bevorzugt Natriumhydroxid verwendet.

Als O-Alkylierungsmittel sind vorzugsweise C₁-C₂-Alkylchloride, C₁-C₆-Alkylbromide, C₁-C₆-Alkyliodide, Dialkylsulfate, α-Chlorcarbonsäuren und deren Salze, Epichlorhydrin sowie Verbindungen der allgemeinen Formel

Cl-CH₂-C(OH)H-CH₂-R₁,

wobei R₁: N⁺R²₃, SO⁻₃
und R² ein C₁-C₃ Alkylrest ist, geeignet.

Vorzugsweise geeignet sind Methylchlorid, Dimethylsulfat, 3-Chlor-2-Hydroxypropyltrimethylammoniumchlorid, Chloressigsäure und deren Na-Salz, Epichlorhydrin.

Besonders bevorzugt geeignet ist Methylchlorid, Epichlorhydrin, Chloressigsäure-Natriumsalz.

Vorzugsweise werden pro Mol Cyclodextrin 17 - 21 mol der geeigneten Base sowie 17-21 mol des O-Alkylierungsmittels oder 200 - 250 mol O-Alkylierungsmittel und 220 - 275 mol Dimethylether eingesetzt.

Die vorzugsweise gesamte Cyclodextrinmenge wird in einer wäßrigen Lösung der genannten Base einer Konzentration von 5-20 % (w/w), bevorzugt 8-12% (w/w), und einer Menge von 1-5 mol, bevorzugt 2-3 mol, der eingesetzten Base pro mol Cyclodextrin gelöst.

Die restliche Menge an Base wird anschließend bevorzugt gleichzeitig mit dem O-Alkylierungsmittel zudosiert. Die Dosierung von O-Alkylierungsmittel und Base erfolgt portionsweise oder kontinuierlich, wobei die kontinuierliche Dosierung bevorzugt ist.

Die bevorzugt gleichzeitig mit dem O-Alkylierungsmittel zudosierte Base wird vorzugsweise als wäßrige Lösung zugegeben. Vorzugsweise wird eine wäßrige Lösung einer Konzentration von 20-60 % eingesetzt. Besonders geeignet ist eine 50 %ige wässrige Lösung (w/w).

Überschüssiges O-Alkylierungsmittel kann nach beendeter Reaktion leicht in an sich bekannter Weise, beispielsweise durch Anlegen von Vakuum (10-100 mm H₂0), entfernt werden.

Die Reaktion wird nach Lösen des Cyclodextrins, vorzugsweise bei einer Temperatur von 50-100°C, besonders bevorzugt bei 60-85°C, und einem Druck von größer 10 bar, insbesondere bei 11 - 25 bar, durchgeführt. Die Reaktionszeit ist temperatur- und druckabhängig. Sie beträgt weniger als 5 h. In der Regel ist die Reaktion nach etwa 1 h beendet.

Nach beendeter Reaktion wird die Lösung, falls erforderlich, durch Säurezugabe neutralisiert. Hierfür sind besonders Mineralsäuren, insbesondere Phosphor-, Schwefel- oder/und Salzsäure geeignet. Besonders geeignet ist Salzsäure mit einer Konzentration von 20 bis 37 % (w/w).

Anschließend kann ggf. nach Neutralisation des Reaktionsansatzes die erhaltenen alkylierten Cyclodextrin-Derivate aus dem Reaktionsansatz in an sich bekannter Weise abgetrennt werden.

Das erfindungsgemäße Verfahren hat gegenüber dem aus EP 646 602 bekannten Verfahren den Vorteil, daß es kontinuierlich durchgeführt werden kann. Durch die erfindungsgemäße Erhöhung des Reaktionsdrucks wird mehr O-Alkylierungsmittel in Wasser gelöst und damit die Reaktionsgeschwindigkeit als Folge der Eduktkonzentration erhöht. Damit ergeben sich kürzere Reaktor-Belegungszeiten und somit höherer Austoß. Das Verfahren kann in kontinuierlicher Betriebsweise wirtschaftlich realisiert werden.

Die Abtrennung der erhaltenen Cyclodextrin-Derivate von anorganischen Salzen wird in an sich bekannter Weise durchgeführt. Beispiele für bekannte Verfahren sind Ionenaustauschchromatographie (siehe z.B. US 4.764.604), die Extraktion mit einem organischen Lösungsmittel wie Methylenchlorid oder Chloroform oder die Ultrafiltration.

Eine weitere Aufreinigung der Cyclodextrin-Derivate erfolgt, falls erwünscht, mittels an sich bekannter Verfahren wie beispielsweise Entfärbung mit Aktivkohle, Adsorptionschromatographie an Aktivkohle, Kieselgel, Aluminiumhydroxid.

Die nach dem erfindungsgemäßen Verfahren erhaltenen Cyclodextrin-Derivate eignen sich für alle bekannten Anwendungen von Cyclodextrinen und Cyclodextrin-Derivaten.
Die erfindungsgemäßen methylierten Cyclodextrin-Derivate eignen sich insbesondere
- zur Solubilisierung von schwer wasserlöslichen Verbindungen wie beispielsweise Steroiden,
- als Formulierungshilfsmittel in pharmazeutischen, kosmetischen und agrochemischen Produkten,
- zur Stabilisierung von licht- oder oxidationsempfindlichen Stoffen,
- zur Entfettung und Reinigung von beliebigen Oberflächen,
- zum Ersatz von organischen Lösungsmitteln insbesondere bei der Trennung und Extraktion von Substanzen aus lipophilen Medien,
- als Hilfsstoffe, insbesondere bei der Beschichtung und/oder Haftvermittlung in der Papier-, Leder- und Textilindustrie,
- als Phasentransfer-Katalysator
- sowie zur Geschmacks- und Geruchsmaskierung.

Die folgenden Beispiele dienen der weiteren Erläuterung der Erfindung

### Beispiel 1

### Herstellung von Methyl-β-Cyclodextrin

In einem druckfesten 100 l-Rührbehälter wird 12,5 kg feuchtes β-Cyclodextrin (9 % Wasser, 10 mol) (käuflich erhältlich unter der Bezeichnung BETA W7 bei Wacker-Chemie; 81737 München) in 10 kg einer 10 %igen, wässrigen Natronlauge gelöst. Die Reaktionsmischung wird auf 85°C erhitzt und 9,9 kg Methylchlorid kontinuierlich über 1 h bei einem Druck von etwa 20 bar zudosiert. Gleichzeitig wird im Laufe der 1 h 13 kg einer 50 %igen Natronlauge zugegeben. Nach 1,5 h wird mit 15 % (w/w) Salzsäure neutralisiert und das Gemisch entspannt. Nach der Phasentrennung wird die organische Phase abgetrennt und das Lösungsmittel bei Normaldruck abdestilliert.
Ausbeute: ca. 12 kg Methyl-β-Cyclodextrin

### Beispiel 2

### Herstellung von Methyl-γ-Cyclodextrin

Methyl-γ-Cyclodextrin wird, wie in Beispiel 1 beschrieben, hergestellt, wobei anstelle des β-Cyclodextrins γ-Cyclodextrin (käuflich erhältlich unter der Bezeichnung GAMMA W8 bei Wacker Chemie; 81737 München) eingesetzt wird und die Reaktion bei einer Temperatur von 60°C durchgeführt wird.
Ausbeute: ca. 11 kg Methyl-γ-Cyclodextrin

### Beispiel 3

### Herstellung von Methyl-α-Cyclodextrin

Methyl-α-Cyclodextrin wird, wie in Beispiel 1 beschrieben, hergestellt, wobei anstelle des β-Cyclodextrins α-Cyclodextrin (käuflich erhältlich unter der Bezeichnung ALPHA W6 bei Wacker Chemie; 81737 München) eingesetzt wird und die Reaktion bei einer Temperatur von 70°C durchgeführt wird.
Ausbeute: ca. 12 kg Methyl-α-Cyclodextrin

### Beispiel 4

### Herstellung von Methyl-α/β/γ-CD

Die Herstellung erfolgt gemäß Beispiel 1, wobei 2 kg feuchtes Cyclodextrin (9% Wasser) in 1,63 kg einer 10%igen, wässrigen Natronlauge gelöst werden. Die Reaktionsmischung wird auf 70°C/85°C/60°C erhitzt und 20 kg Methylchlorid und 20 kg Dimethlyether kontinuierlich über 1 h bei einem Druck von etwa 20 bar zudosiert. Gleichzeitig wird im Laufe der 1 h 2 kg einer 50 %igen Natronlauge zugegeben. Nach 1,5 h wird mit 32 % (w/w) Salzsäure neutralisiert und das Gemisch entspannt. Nach der Phasentrennung wird die organische Phase abgetrennt und das Lösungsmittel bei Normaldruck abdestilliert.

### Beispiel 5

### Kontinuierliche Herstellung von Methyl-β-CD

Chargenweise wird in einem Rührbehälter β-Cyclodextrin gemäß Beispiel 1 gelöst. Pro Stunde werden 2 kg der Lösung mit 1 kg Methylchlorid versetzt und bei 85°C und 20 bar in einem Rohrreaktor ausreichender Länge gepumpt. Über der Länge verteilt befinden sich zahlreiche Dosierstellen, über die kontinuierlich 1,2 kg Natronlauge aufgegeben wird. Nach dem Reaktor wird kontinuierlich Salzsäure zudosiert und in einen Rührbehälter entspannt. Über Dampfinjektion oder Mantelbeheizung wird überschüßiges Methylchlorid abgetrennt. Nach der Phasentrennung erfolgt die weitere Aufarbeitung.

Wie in diesem Beispiel beschrieben können bei entsprechenden Temperaturen auch α- und γ-Cyclodextrin verarbeitet werden.

## Patentansprüche

1. Verfahren zur Herstellung von alkylierten Cyclodextrin-Derivaten bei dem α-, β- und/oder γ-Cyclodextrin in einer geeigneten Base mit einem geeigneten O-Alkylierungsmittel umgesetzt werden, wobei zunächst α-, β- und/oder γ-Cyclodextrin in einer wässrigen Lösung der Base zu einer Konzentration von 25 - 75 % w/w derart gelöst werden, daß pro mol CD 1 - 5 mol der Base eingesetzt werden und anschließend gleichzeitig oder in beliebiger Reihenfolge portionsweise oder kontinuierlich 10 bis 250 mol des O-Alkylierungsmittels pro mol CD sowie bis zu einer maximalen Basekonzentration von 10 bis 30 mol pro mol CD die geeignete Base zugegeben wird, dadurch gekennzeichnet, daß das Verfahren bei einem Druck größer 10 bar abs. und mit einer Reaktionszeit kleiner 5 Stunden durchgeführt wird.

2. Verfahren nach Anspruch 1, dadurch gekennzeichnet, daß es bei einem Druck von 11 bis 25 bar durchgeführt wird.

3. Verfahren nach Anspruch 1 oder 2, dadurch gekennzeichnet, daß zusätzlich Dimethylether zugegeben wird.

4. Verfahren nach Anspruch 1, 2 oder 3, dadurch gekennzeichnet, daß das Verfahren nach Lösen des Cyclodextrins bei einer Temperatur von 50-100°C, durchgeführt wird.

5. Verfahren nach einem der Ansprüche 1 bis 4, dadurch gekennzeichnet, daß als Basen Alkalihydroxide, Erdalkalihydroxide oder deren Mischungen eingesetzt werden.

6. Verfahren nach einem der Ansprüche 1 bis 5, dadurch gekennzeichnet, daß das O-Alkylierungsmittel ausgewählt ist aus der Gruppe C₁-C₂-Alkylchloride, C₁-C₆-Alkylbromide, C₁-C₆-Alkyliodide, Dialkylsulfate, α-Chlorcarbonsäuren und deren Salze, Epichlorhydrin und Verbindungen der allgemeinen Formel Cl-CH₂-C(OH)H-CH₂-R₁, wobei R₁ N⁺R²₃, SO₃⁻ bedeutet und R² ein C₁-C₃ Alkylrest ist.

7. Verfahren nach einem der Ansprüche 1 bis 6, dadurch gekennzeichnet, daß es in kontinuierlicher Betriebsführung durchgeführt wird.
